# EUROPEAN PATENT SPECIFICATION

(11) **EP 1 643 493 B1**
(45) Date of publication and mention of the grant of the patent: **10.09.2008**
(21) Application number: 04747162.8
(22) Date of filing: 01.07.2004
(51) Int. Cl.: G11B 5/738

(54) **POWDER FOR LOWER LAYER OF APPLICATION TYPE OF LAYERED MAGNETIC RECORDING MEDIUM AND MAGNETIC RECORDING MEDIUM USING THE SAME**
PULVER FÜR DIE UNTERE SCHICHT DES ANWENDUNGSTYPS EINES GESCHICHTETEN MAGNETISCHEN AUFZEICHNUNGSMEDIUMS UND MAGNETISCHES AUFZEICHNUNGSMEDIUM DAMIT
POUDRE POUR COUCHE D'APPLICATION INFERIEURE DE SUPPORT D'ENREGISTREMENT MAGNETIQUE STRATIFIE, ET SUPPORT D'ENREGISTREMENT MAGNETIQUE L'UTILISANT

(30) Priority: 04.07.2003 JP 2003192319
(43) Date of publication of application: 05.04.2006
(73) Proprietor: DOWA Electronics Materials Co., Ltd., Chiyoda-ku Tokyo 101-0021 (JP)
(72) Inventor: KONNO, Shinichi c/o Dowa Mining Co., Ltd, Tokyo 100-8282 (JP); INOUE, Kenichi c/o Dowa Mining Co., Ltd, Tokyo 100-8282 (JP); INOUE, Ken c/o Dowa Mining Co., Ltd, Tokyo 100-8282 (JP); IIHOSHI, Hiroshi c/o Dowa Mining Co., Ltd, Tokyo 100-8282 (JP); UEYAMA, Toshihiko c/o Dowa Mining Co., Ltd, Tokyo 100-8282 (JP)
(74) Representative: Wagner & Geyer
(86) International application number: PCT/JP2004/009693
(87) International publication number: WO 2005/004116

(56) References cited:
- JP-A- 6 060 362
- JP-A- 7 192 248
- JP-A- 9 022 524
- JP-A- 9 170 003
- JP-A- 9 259 422
- JP-A- 11 273 056
- JP-A- 11 296 851
- JP-A- 11 353 637
- JP-A- 2000 143 250
- JP-A- 2000 222 721
- JP-A- 2000 251 248
- JP-A- 2000 327 335
- JP-A- 2001 243 619
- JP-A- 2001 344 738
- US-A- 4 758 415

## Description

### Technical Field

This invention relates to a nonmagnetic powder for use in an underlayer of a coating-type magnetic recording medium of double-layer structure and a coating-type magnetic recording medium of double-layer structure enhanced in electromagnetic conversion characteristic and surface smoothness of its outermost surface by use of the nonmagnetic powder.

### Background Art

Wide use is made of coating-type magnetic recording media of double-layer structure (magnetic recording tapes including video tapes for home use and the like) that are provided between a magnetic recording layer composed of magnetic powder dispersed in resin and a nonmagnetic support (base film) with a nonmagnetic layer (underlayer) composed of nonmagnetic particulate powder dispersed in resin. Magnetic recording media having such a double-layer structure are excellent in electromagnetic conversion characteristic and contribute greatly to achieving the high-density recording that is in high demand nowadays. Research and development in this sector has become active also because the surface smoothness of the magnetic layer surface and the durability of the tape itself can be improved by selection of the particles contained in the underlayer. In this specification, the term "underlayer powder" refers to a powder used in the nonmagnetic layer of such a double-layer structure coating-type magnetic recording medium.

The increase in information volume in recent times has been tremendous and a need is felt for backup recording medium for coping with the increase. Among others, the coating-type magnetic recording medium in the form of wound tape is capable of recording large amounts of information per unit volume and is low in cost per unit information volume, so that expectations for such coating-type magnetic recording medium have become higher and higher. The properties desired of a magnetic recording medium are still greater recording capacity per unit volume and, with respect to the magnetic recording medium per se, improved strength maintenance, storage stability capable of enduring long-term storage, and reliability.

In order to increase recording capacity per unit volume, it is necessary to reduce the thickness of the medium itself and, recently, attempts are being made to achieve metal magnetic powder of ultra-fine particles and to improve dispersion techniques. Thanks to technological advances in these areas, it has become possible to reduce the thickness of the medium itself by formation of a very thin magnetic layer, whereby the recording capacity per unit volume of magnetic recording media has improved dramatically in recent years.

With advances in high-density recording capacity, the surface properties of magnetic recording medium have come to have very great significance. This is because improvement of surface smoothness further improves the electromagnetic conversion characteristic, one of the merits of the double-structure recording medium, and also improves dimensional stability, thus enabling higher densification of surface layer magnetic powder packing. Moreover, owing to the reduction of the magnetic recording layer to a very thin thickness, the surface properties of the double-layer magnetic recording medium are strongly affected by not only the magnetic recording layer but also by the underlayer, so that the need for improvement of the surface smoothness of the base film and the surface smoothness of the nonmagnetic underlayer containing nonmagnetic particles formed thereon has become more extensive than ever before.

Heretofore, improvement of base film surface smoothness has been pursued through such methods as defining the type of macromolecule constituting the base film and blending in heterogeneous substances. As regards the nonmagnetic underlayer, on the other hand, optimum conditions for obtaining an underlayer excellent in surface properties have been widely studied from the aspects of, for example, type of nonmagnetic particle, particle shape, particle diameter, particle surface property, powder specific surface area, powder pH, resin adsorption amount, bulk density, residual magnetization, true specific gravity, residual moisture, coating material application method and the like. Efforts to improve the surface properties of the underlayer have come to be particularly focused on suitably defining the particle average major axis length, average minor axis length and axial ratio (average major axis length / average minor axis length) and the distribution of the major axis and minor axis particle diameter (uniform particle diameter with a narrow particle diameter distribution being preferable).

Since the emergence of the double-layer medium approach, many studies attempting to use α-Fe₂O₃ (hematite) for the nonmagnetic layer have been made. This is because α-Fe₂O₃ was long known as a familiar pigment and was consistently available as an intermediate product of metal magnetic powder, so that no great effort was needed to industrially supply a product of uniform particle diameter and excellent distribution in large quantity, and it was easy to conceive that it could be redirected for use as a raw material for the underlayer; such use of hematite in a nonmagnetic layer is taught, for instance, in Patent Document 1.

Although a wet method and a dry method are known as methods for producing acicular iron oxide (hematite) used in an underlayer powder, the wet method must be declared disadvantageous from the viewpoint of industrial productivity because it requires hydrothermal synthesis at a high temperature. On the other hand, the process called the dry method of dehydrating α-FeOOH to α-Fe₂O₃ by heating in a non-reducing atmosphere followed by firing is readily adaptable for industrial production but, owing to the need for a high-temperature firing process, is problematic in that inter-particle sintering occurs and acicularity tends to be lost, so that the tape properties (surface smoothness and coated film strength) are deficient.

It has therefore been proposed to adhere to the particle surfaces or incorporate within the particles a compound capable of preventing sintering even under high-temperature heating, such as an aluminum compound, silicon compound or phosphorus compound. Although each of these has its own properties, phosphorus has the strongest sinter preventing effect and is also preferable in the point of enabling the surface of the underlayer powder to be made acidic. However, coating with a phosphorus compound elutes the iron component inside the hematite particle, which may react with fatty acid in the coating material used for tape making to form fatty acid-iron. In some cases, the phosphorus compound may elute the iron component in iron-system metal particles forming the magnetic layer and similarly form fatty acid-iron. When fatty acid-iron is formed in the tape, it produces a change in the coating with passage of time, thus degrading storage stability. In addition, phosphorus decomposes fatty ester and urethane binder in the layer and further impedes adsorption on the particle surfaces of binder containing a polar group, thus adversely affecting the dispersivity of particles in the tape.

It has also been pointed out that phosphorus and other soluble components in a double-layer tape may have adverse effects on the properties of the tape and extensive attempts have also been made to reduce these as much as possible. For example, with regard to ferromagnetic metal powder and nonmagnetic powder, Patent Document 2 focuses on the water soluble anions and cations therein and, after discussing their adverse effects, teaches use of carbon dioxide as a method of reducing them. Further, Patent Document 3 describes a method of obtaining high-purity hematite powder by pickling hydrous cake of iron oxy-hydroxide particles to reduce soluble components, and Patent Document 4 describes a method of refining iron oxide containing quartz by mixing and then calcining sodium carbonate and iron oxide and imparting a leaching operation in an acidulous liquor. Moreover, Patent Document 5 describes a method of producing hematite particles adapted to use a chelating agent to remove Fe³⁺ from a strong acid mother liquor in which hematite is generated in a monodispersed state.

| | |
|---|---|
| Patent Document 1 | JP-Hei-9-170003A |
| Patent Document 2 | JP-Hei-9-305958A |
| Patent Document 3 | JP-Hei-8-133742A |
| Patent Document 4 | JP-Hei-6-183749A |
| Patent Document 5 | JP-Hei-7-89732A |

Document JP-A-11 353 637 discloses an acicular hematite particle powder for non-magnetic base layer and magnetic recording medium having non-magnetic base layer using the acicular hematite particle powder. The hematite particle powder is obtained by dissolving an aqueous suspension of an acicular haematite particle powder with an acid.

From document JP-A-9-259 422 a magnetite recording medium is known which has a magnetic layer containing iron-based ferromatic metal powder disbursed in a binder on the non-magnetic substrate.

Document JP-A-2000 251 248 describes a magnetic recording medium with a non-magnetic powder, the average grain size of which is set to 20 to 200 nm and the variation coefficient of such grain size is controlled to 2 to 30%.

### Object of the Invention

The inventors carried out a series of studies regarding components among the aforesaid soluble components that may have an adverse effect on properties when a tape is made and as a result discovered that presence of intermixed phosphorus in the process of producing goethite has a very undesirable effect. However, as set out in the foregoing, it has also been ascertained that presence of some amount of phosphorus may have an inter-particle sinter preventing effect during firing and a favorable effect on properties, so that a study of the balance between these incompatible properties is highly significant from the industrial viewpoint.

The object to be accomplished by the present invention is therefore to suppress generation of fatty acid-iron even in the case where phosphorus is incorporated in or adhered to a powder for an underlayer composed of iron oxide and, upon satisfying the properties required of a powder for an underlayer, providing a magnetic recording medium of high reliability.

### Disclosure of the Invention

Said object of the invention is achieved by a powder as set forth in claim 1. Preferred embodiments of this powder are stated in the sub-claims 2 to 5.

Said object is also achieved by a coating-type magnetic recording medium as claimed in claim 6.

The underlying object can also be achieved by a process for producing a hematite powder according to claim 7 or by a process for producing a hematite powder according to claim 8

In order to accomplish the aforesaid object, the inventors conducted a series of studies regarding tape properties, the physical properties of hematite and the like, by which it was discovered that tape properties deteriorate in the case where phosphorous readily desorbs from the final product hematite but that when phosphorus is present in some strongly bonded state or is in solid solution, the tape properties are by no means degraded but, to the contrary, are dramatically improved, and further discovered that this occurs favorably only under limited conditions, thereby accomplishing the present invention.

Specifically, the present invention provides a powder for an underlayer of a coating-type double-layer magnetic recording medium, which is a powder composed of nonmagnetic iron oxide particles having acicular or nearly acicular shape, having:
average major axis length of the particles of 20 - 200 nm, and
specific surface area calculated by BET method of 30 - 100 m²/g, and containing:
   0.1-5 wt% of phosphorus,
   soluble phosphorus compound being not greater than 100 ppm based on P, and having:
      powder pH of less than 8,
      soluble sodium content of not greater than 100 ppm based on Na, and
      soluble sulfate of not greater than 100 ppm based on SO₄.

When being a powder composed of nonmagnetic iron oxide particles having acicular or a nearly acicular shape that satisfies the conditions above, improves tape properties, particularly tape storage stability and durability, when used as an underlayer

Incorporation of 0.01 - 50 wt% of aluminum and/or silicon in this underlayer powder enables additional improvement of tape properties and it is further possible to incorporate R (R representing at least one rare earth element including Y) at R/Fe expressed in atomic percent (at.%) of 0.1 - 10 at%. An underlayer powder exhibiting still better smoothness can be obtained by using the powder containing rare earth element(s) R. The particle shape of the underlayer powder of the present invention can be acicular or a closely similar particle shape such as flat acicular-like, spindle shape, rod-like, rice grain-like, ellipsoid or granular.

### Preferred Embodiments of the Invention

The present invention is characterized in the point of using as the powder forming a nonmagnetic layer of a double-layer coating-type magnetic recording medium, a powder composed of acicular nonmagnetic iron oxide particles whose average major axis length of the particles is 20 - 200 nm, and specific surface area calculated by BET method is 30 - 100 m²/g, which has a phosphorus content in the particulate powder of 0.1 - 5 wt%, and soluble phosphorus compound of not greater than 100 ppm based on P, a soluble sodium content of not greater than 100 ppm based on Na, soluble sulfate of not greater than 100 ppm based on SO₄ and powder pH of less than 8. This underlayer iron oxide powder can be obtained by washing iron oxy-hydroxide surfaced-treated with a phosphorus compound with a solution of EDTA or other complexing agent, washing with water, drying and thereafter firing at a high temperature. Optionally, it is possible to wash iron oxide obtained by firing iron oxy-hydroxide surface-treated with a phosphorus compound using a solution of EDTA or other complexing agent solution, and it is acceptable to conduct the washing both before and after firing.

Although acicular nonmagnetic iron oxide (hematite) can be obtained by firing acicular iron oxy-hydroxide produced by wet reaction at a high temperature, as pointed out earlier, inter-particle sintering and degradation of the acicularity of the particle per se occurs when firing treatment is conducted at high temperature. The inventors made a thorough study from the viewpoint that it might be possible to overcome the problem of inter-particle sintering by adherence of a phosphorus compound to iron oxy-hydroxide and, as a result, by such adherence were able to obtain α-Fe₂O₃ excellent in acicularity that maintained the particle shape even when subjected to firing at a high temperature; however, when the α-Fe₂O₃ was used to make a double-layer tape according to an ordinary method, a marked increase in water-soluble components, notably phosphorus, occurred to make it unacceptable for use from the aspects of storage stability and the like.

Through a multifaceted study into the cause, it was found that water-soluble components of phosphorus remaining in the hematite are what exert the most adverse effect. Specifically, regarding phosphorus that elutes into the coating material adhered to the surface of the α-Fe₂O₃, when tape was made after washing by the method set out later, dispersivity into the resin forming the underlayer improved, the surface smoothness of the tape was good, and, moreover, the surface properties of the iron oxide particles further improved owing to the presence of an appropriate amount of phosphorus compound on the surfaces, so that adhesion to the resin improved and the strength of the coating increased.

Regarding the time point of phosphorus adherence, imparting phosphorus at the stage of the iron oxy-hydroxide before firing is effective in the point of obtaining an inter-particle sinter prevention effect by the phosphorus, while subjecting the hematite after firing to the same phosphorus adherence treatment makes it possible at the time of making a tape to realize improvements in both the smoothness of the magnetic layer surface and the electromagnetic conversion characteristics, so that imparting phosphorus at either stage provides a corresponding characteristic result. As the mode of imparting phosphorus at this time, there can be used, for example, a phosphorus compound solution, e.g., an aqueous solution of a phosphate such as sodium phosphonate or sodium phosphinate, diluted orthophosphate or the like, so that the mode is not subject to any particular restriction.

As mentioned earlier, when phosphorus is adhered to the surface at the iron oxy-hydroxide stage, inter-particle sintering can be inhibited at the firing stage, thereby making it possible to obtain acicular hematite particles capable of improving magnetic layer surface smoothness, electromagnetic conversion characteristics and dimensional stability at the stage of fabricating a double-structure recording medium. However, owing to the fact that the underlayer acicular iron oxide powder contains phosphorus compounds, the amount of water-soluble phosphates eluted from the iron oxide powder increases. This increase in water-soluble phosphates is accompanied also by occurrence of elusion of iron from the iron oxide used as the underlayer and further from the ferromagnetic metal alloy particles. The eluted iron produces a chemical reaction with the fatty acids in the coating, so that fatty acid-iron accumulates in the coating to cause degradation of tape reliability and storage stability. In the present invention, therefore, consideration was given to washing the powder of iron oxy-hydroxide or iron oxide subjected to phosphorus treatment to remove soluble phosphor and reduce phosphorus merely physically adsorbed on the particle surfaces and phosphorus low in chemical bonding force.

The washing is preferably conducted using washing water added with a soluble complexing agent. Although ordinary pure water can be used at the start of washing, use of washing water at this time that has been added with an acidic mineral acid or, optionally, dilute ammonia water is not precluded. The temperature of the washing solution can be ordinary temperature but is preferably a temperature suitable for forming the respective complexes or a temperature at which the added complexing agent dissolves well, and in actual practice the temperature and pH are preferably adjusted in light of the relationship with the formation constant of the complex. The washing can be by the method of wet pulverization that conducts washing and pulverization (cake crushing) simultaneously but there is no problem with a method that conducts pulverization (crushing) after washing. As a washer that does not involve crushing there can be used a filter press or the like, while for conducting washing together with pulverization (crushing) there can be used an ultrasonic washer, ball mill, tube mill, vibrating ball mill, rod mill, sand grinder, sand mill, Dyno Mill, colloid mill, super mill or the like. These machines can be used in combination with the washing liquor conditions set out earlier.

Further, since soluble sodium salt or soluble sulfate present in the underlayer powder corrodes the magnetic metal powder, it has an undesirable effect on tape reliability and storage stability. However, it was found that when the washing for reducing soluble phosphorus according to the present invention is performed, soluble sodium salt and soluble sulfate are simultaneously reduced together with the washing, so that the reliability and storage stability of the tape itself were still further improved.

The average major axis length (average value of the major axis length measured for 100 particles selected at random in the field of view of a TEM micrograph) of the underlayer powder according to the present invention is 20 - 200 nm, preferably 50 - 160 nm, more preferably 50 - 120 nm. In order to enhance the surface smoothness of the nonmagnetic layer it is necessary to disperse the nonmagnetic particles uniformly in the vehicle, i.e., to select particles excellent in dispersivity. When the average major axis length is smaller than 20 nm, dispersion of the particles in the vehicle becomes poor, while large particles exceeding 200 nm are undesirable because the surface smoothness of the magnetic layer surface deteriorates.

The particles should have an axial ratio (aspect ratio), an index of their degree of acicularity, of 2 - 10, preferably 3 - 8 and more preferably 4 - 8. When the axial ratio is smaller than 2, only weak coated film strength can be obtained when the hematite particles are distributed in resin to form a coating. On the other hand, when the axial ratio is greater than 10, dispersion in the resin is poor, resulting in a nonmagnetic layer of inferior surface smoothness. The reason why good surface smoothness and good coated film strength can both be obtained when acicular iron oxide particles having an axial ratio within the range defined by the present invention is used in the nonmagnetic layer is considered to be that regular alignment of the particles in the planar direction of the base film at the time of coating ensures smoothness of the nonmagnetic layer surface and, further, that good coated film strength of the tape is acquired because the particles assume a mutually entangled state.

The specific surface area of the underlayer powder of the present invention is, as calculated by the BET method, 30 - 100 m²/g, preferably 35 - 90 m²/g, more preferably 35 - 80 m²/g. A specific surface area of higher than 100 m²/g means that many fine particles are present, which is undesirable because it leads to deficient dispersion in the coating material. Further, a low specific surface area below 30 m²/g means that the particle size is large or that aggregation and/or sintering of the particles has occurred. When aggregated and/or sintered particles are present among the particles, surface smoothness cannot be secured. Therefore, in order to ensure smoothness of the nonmagnetic layer surface and achieve a magnetic recording medium excellent in running durability and stability at the time of tape making, it is necessary for the BET method specific surface area of the underlayer powder according to the present invention to be in the range of 30 -100 m²/g.

The powder pH of the invention underlayer powder is in the range of 3 - 8, preferably 4 - 8, more preferably 4 - 7. When the powder pH is lower than 3, there is a danger of a strong adverse effect on tape storage stability and tape reliability because galvanic cells created by reaction with the metal magnetic alloy powder of the upper layer promotes corrosion of the metal magnetic powder. The powder pH is therefore 3 or greater, preferably 4 or greater. Moreover, in a double-layer structure magnetic recording medium, in order to inhibit changes in the tape with aging and improve tape durability, the nonmagnetic underlayer is usually added with one or more fatty acids, called lubricants, for reducing interference between the tape surface and head. In most cases, such fatty acids exhibit acidity, so that if the powder pH of the particles is high, the fatty acids react with Ca ions and/or Na ions in the powder through the intermediate of the coating material, which is undesirable because it prevents the lubricant from exhibiting its lubricating activity. Further, when the powder pH is high, sufficient shearing force does not act on the coating material during preparation of the nonmagnetic coating material for coating, which makes total elimination of aggregates impossible, thus degrading surface properties. The powder pH of the underlayer powder of the present invention is therefore 8 or less, preferably 7 or less.

The underlayer powder of the present invention may contain Al (aluminum) at 0.01 - 50 wt%. The method of A1 addition is not particularly defined; either the method of adding aluminum for incorporation in the particles during the reaction or the method of adding Al to the liquor after the reaction so as to adhere Al to the surface of the hydrous ferric oxide suffices, and it is also acceptable to conduct both methods simultaneously. Inclusion of Al improves compatibility with the binder to improve dispersivity in the resin, thereby making the nonmagnetic layer smoother. Moreover, when Al is incorporated, an effect of suppressing heating-induced inter-particle sintering can be realized, so that good surface properties, i.e., improved smoothness, can be obtained during tape making.

At Al of less than 0.01 wt%, no effect of Al addition is obtained and inter-particle sintering advances in the high-temperature process, so that the foregoing effects cannot be enjoyed. On the other hand, when Al is incorporated at greater than 5 0 wt%, compatibility of the powder with resin declines to make dispersion difficult, so that aggregation occurs in the resin to degrade the tape surface properties. Therefore, Al content is made 0.01 - 50 wt%, preferably 0.02 - 30 wt%, more preferably 0.05 - 30 wt%.

The underlayer powder of the present invention can contain 0.01- 50 wt% of Si. When Si is incorporated, a shape maintaining effect during heating and firing can be obtained (referred to JP-Hei-6-302413, for example). Although good surface smoothness can be obtained during tape making thanks to reduced inter-particle sintering, no effect of addition is observed at Si of less than 0.01 wt%, and a good surface cannot be realized because inter-particle sintering advances during the high-temperature process. On the other hand, when Si is incorporated in excess of 50 wt%, compatibility between the powder and resin declines to make dispersion difficult. Therefore, Si content is made 0.01- 50 wt%, preferably 0.01 - 30 wt%, more preferably 0.01 - 10 wt%. No problem is encountered with a composition simultaneously containing Al and Si for the purpose of obtaining a synergistic effect between Al and Si.

When Al, Si are incorporated in this manner, these elements are, from the viewpoint of sinter prevention, more preferably present on the outside rather at the center portion. Specifically, when the abundance ratio (A) of atoms of these elements relative to iron at the surface portion is compared with the atomic abundance ratio (B) of these elements relative to iron throughout, (A) / (B) should be 1 or greater. Although techniques available for analyzing the ratios include the method of dissolving out only the surface elements for comparison with the overall element ratio and that of analyzing the surface by ESCA (electron spectroscopy for chemical analysis), the analysis method used in the Examples set out later is the former using the abundance ratio of elements dissolved out with acid.

Further, the underlayer powder of the present invention may contain R (R being at least one rare earth element including Y) at R/Fe expressed in atomic percent (at.%) of 0.1 - 10 at%, by which a magnetic recording medium can be obtained that is suitable for high densification and excellent in surface smoothness and good in durability.

In addition to the foregoing, as an underlayer powder, the acicular nonmagnetic iron oxide powder in accordance with the present invention preferably also has the following properties.

### [Stearic acid adsorption amount]

A smaller stearic acid adsorption amount indicates a smaller amount of fatty acid constituting lubricant adsorbed during dispersion of the underlayer powder in the coating material. A smaller stearic acid adsorption amount is therefore desirable. Specifically, the stearic acid adsorption amount is 0.1 - 3.0 g/m², preferably 0.1 - 2.0 g/m², more preferably 0.1 - 1.5 g/m².

### [Resin adsorption amount]

A higher resin adsorption amount (UR) enhances adherence to the resin and improves the coated film strength. Specifically, the resin adsorption amount (UR) should be 0.1 - 4.0 mg/m², preferably 0.5 - 3.0 mg/m², more preferably 1.0 - 3.0 mg/m². For the same reason as with UR, a higher resin adsorption amount (MR) is also desirable for improving the coated film strength. Specifically, the resin adsorption amount (MR) should be 0.1 - 4.0 mg/m², preferably 1.0 - 4.0 mg/m², more preferably 2.0 - 4.0 mg/m².

### [Tape surface smoothness]

In the case of a coating-type recording medium of double-layer structure, a magnetic layer and a nonmagnetic layer are applied onto a base film at one time, whereafter treatment is performed for smoothing the surface by conducting calendering, and the smoothness after calendering expressed as surface roughness should be not greater than 200 Angstrom, preferably not greater than 150 Angstrom. Moreover, change in the thickness between before and after calendering is desirably not less than 50%. A larger thickness change rate is better because the formability of the underlayer is better and surface smoothness of the tape surface improves with increasing rate of change in thickness between before and after calendering.

The number of steel ball passes, which is used as an index quantitatively indicating tape running durability, is desirably exhibits a value of not less than 600 passes, preferably not less than 900 passes, more preferably not less than 1,500 passes. Since running durability is affected by not only the coated film strength but also the lubricant in the coated film, degradation of lubricant performance is undesirable. Further, regarding the scratch width during ball sliding, since the scratch width becomes smaller with higher running durability, one as narrow as possible is desired. The scratch width which should be defined as satisfactory in the case of ordinary tape making is 190µm or less, preferably 170µm or less, more preferably 150 µm or less.

In a magnetic recording medium of double-layer structure, when the underlayer is formed using the underlayer powder according to the present invention, the magnetic powder as a coating material constituent of the upper layer formed thereon can be exemplified as set out below.
As a magnetic powder for constituting the magnetic layer (where the notation at.% is relative proportion based on Fe), there can be cited as an example a magnetic powder that is a ferromagnetic powder composed primarily of iron containing
Co : 5 to 50 at.%,
Al: 0.1-50 at.%,
one or two or more rare earth elements (including Y) : 0.1 - 30 at%, periodic table group 1a element (Li, Na, K etc.) : 0.05 wt.% or less, and
periodic table group 2a element (Mg, Ca, Sr, Ba etc.) : 0.1 wt.% or less;
that is an acicular ferromagnetic powder of a shape having average major axis length : 10 - 200 nm,
specific surface area by BET method : 30 - 150 m²/g, and X-ray crystal grain diameter (Dx) : 50 - 200 Angstrom; and that has magnetic properties of
coercive force (Hc) : 1,000 - 3000 Oe, and
saturated magnetization (σs) : 10 - 200 emu/g.

As an example of the magnetic coating material for forming the magnetic layer (upper layer) can be cited a magnetic coating material composed of

| | |
|---|---|
| Metal magnetic powder | 100 parts by weight |
| Carbon black | 5 parts by weight |
| Alumina | 3 parts by weight |
| Vinyl chloride resin (MR110) | 15 parts by weight |
| Polyurethane resin (UR8200) | 15 parts by weight |
| Stearic acid | 1 part by weight |
| Acetylacetone | 1 part by weight |
| Methyl ethyl ketone | 190 parts by weight |
| Cyclohexanone | 80 parts by weight |
| Toluene | 110 parts by weight |

As examples of the base film for forming the double-layer structure magnetic recording medium can be cited polyesters such as polyethylene terephthalate and polyethylene-2-6-naphthalate, polyolefins such as polypropylene, cellulose derivatives such as cellulose triacetate and cellulose diacetate, and plastics such as polyamide, polycarbonate and polyimide.

As an example of the nonmagnetic coating material for forming the nonmagnetic layer (underlayer) can be cited a nonmagnetic coating material composed of

| | |
|---|---|
| Nonmagnetic acicular powder (α-Fe₂O₃) | 85 parts by weight |
| Carbon black | 20 parts by weight |
| Alumina | 3 parts by weight |
| Vinyl chloride resin (MR110) | 15 parts by weight |
| Polyurethane resin (UR8200) | 15 parts by weight |
| Methyl ethyl ketone | 190 parts by weight |
| Cyclohexanone | 80 parts by weight |
| Toluene | 110 parts by weight |

The coating material of the upper layer and underlayer can both be prepared by blending the materials in ratios to obtain the aforesaid compositions and then conducting kneading/dispersing using a kneader and a sand grinder. As is well known, the application of the coating materials onto the support is preferably performed by the so-called wet-on-wet method, which applies the upper magnetic layer as soon as possible while the underlayer is still wet, but the sequential application method also suffices. As the wet-on-wet double-layer coating method, any of the known methods can be applied. For instance, as an example the method of fabricating a magnetic tape by applying the coating materials onto the base film to the desired thicknesses, thereafter orienting the magnetic layer in a magnetic field while the magnetic layer is still in a wet state, and then conducting drying and calendering. In this manner, by using the ferromagnetic powder, coating material compositions and base film exemplified above and forming a nonmagnetic layer using the underlayer powder according to the present invention, there can be manufactured a high-performance magnetic recording medium suitable for high-density recording unlike any heretofore.

### Working Examples

Although typical working examples of the present invention will now be set out, an explanation will first be made regarding the methods of determining the characteristic values in the Examples.
- Average major axis length, average short minor axis length, and axial ratio: For each, measured values of 100 particles randomly selected from a transmission electron micrograph of 174,000 magnifications were averaged.
- Specific surface area : Measured by the BET method.
- Powder pH : Measured by a method conforming to (boiling method of) JIS K5101.
- Water-soluble components: Ultrapure water, 50 mL, was batched off into a 50 mL centrifugation tube and 3 g of a measurement specimen was added thereto. The result was shaken for 10 min and thereafter centrifuged for 20 min, the supernatant was separated off, the supernatant was sampled and Na only analyzed by atomic absorption analysis, and the other components were measured by ICP chemiluminescence analysis. Since Na concentration was high, 10 mL of the supernatant was diluted 5 fold with ultrapure water.
- Stearic acid adsorption amount: Specimen powder was dispersed in a 2% stearic acid solution (solvent: MEK), the specimen powder was separated using a centrifuge, and adsorption amount per unit specific surface area was calculated from the resin concentration of the supernatant.
- Resin adsorption amount (MR) : Calculated the same way as stearic acid adsorption amount using a 1% vinyl chloride resin (MR110) solution (solvent: MEK and toluene).
- Resin adsorption amount (UR) : Calculated the same way as stearic acid adsorption amount using a 2% polyurethane resin (UR8200) solution (solvent: MEK, toluene and MIBK).
- Check of Si and Al concentration state on powder particle surfaces

5 g of prepared hematite was sampled and the surface layer thereof dissolved in 0.1 N hydrochloric acid (100 mL) at 70°C under 5 min stirring. The result was filtered and Fe, Si and Al contained in the obtained solution were quantitatively analyzed. The ratio of Fe and Si (Si/Fe) calculated from the analysis values was defined as the surface layer value, the ratio Si/Fe obtained by analysis of the overall composition was defined as the overall value, and the Si concentration state was represented as the ratio surface layer / overall. The same applies to Al. The quantitative analysis was represented using atomic %.

Coating material viscosity and tape evaluation was done using an underlayer tape fabricated under the following conditions using a coating material prepared from the obtained iron oxide powder under the conditions set out below.
- Coating material preparation conditions
The materials were blended so that the composition became

| | |
|---|---|
| Iron oxide powder | 100 parts by weight |
| Vinyl chloride resin (MR-110) | 10 parts by weight |
| Polyurethane resin | 10 parts by weight |
| Methyl ethyl ketone | 165 parts by weight |
| Cyclohexanone | 65 parts by weight |
| Toluene | 165 parts by weight |
| Stearic acid | 1 part by weight |
| Acetylacetone | 1 part by weight. |

and the coating material obtained by dispersing the result for 1 hr using a centrifugal ball mill was applied onto a base film made of polyethylene terephthalate to the desired thickness of about 3 µm using an applicator, thereby forming a nonmagnetic underlayer (underlayer tape).
- Coating material viscosity : The viscosity of the coating material dispersion was measured using a viscometer (model R110) manufactured by Toki Sangyo Co., Ltd..
- Surface smoothness (surface roughness) : Ra (surface roughness) of the underlayer tape surface was evaluated by measurement with a 3-D fine profilometer (ET-30HK) manufactured by Kosaka Kenkysho Corporation.
- Surface smoothness (glossiness) : The glossiness of the underlayer tape was measured at an angle of 60 degrees with a gloss meter.
- Coated film strength (steel ball sliding) : The coated surface of the underlayer tape was attached to a glass plate with the coated surface facing upward, the glass plate was placed at a horizontal place, a 5-mm diameter stainless steel ball was placed on the coated surface of the tape, and a vertical load of 5 g was applied to the ball. In this condition, the glass plate was moved back and forth 20 mm in each direction 300 times at a constant horizontal velocity of 2320/min. After this operation, the width of the scratch left on the tape surface by the SUS steel ball was observed under an optical microscope to measure the scratch width. Further, the number of passes up to tape exfoliation was determined and defined as the number of sliding passes.
- Running durability (steel ball sliding) : The number of sliding passes up to detachment of the coated film was measured in the aforesaid steel ball sliding.

### Example 1

710 g of iron oxy-hydroxide (α-FeOOH) having a major axis length of 132 nm and a specific surface area by the BET method of 127 m²/g was dispersed in 40 liter of pure water, vigorously stirred with the liquor maintained at a temperature of 35 °C, and maintained in this condition for 30 min. Next, with stirring continued, 533.1 g of an orthophosphoric acid solution formulated to 2.0 wt% based on phosphorus was added and stirring was continued for 30 min with the temperature still maintained at 35 °C, thereby coating the iron oxy-hydroxide with phosphorus. The so-obtained slurry was separated into mother liquor and cake by filtering, whereafter the cake was repulped, thereafter redispersed in a solution obtained by dissolving 1 wt% of ethylenediamine tetraacetic acid (EDTA) in pure water, heated to a temperature of 70 °C and held thereat for 24 hr under exposure to ultrasound. Then, following filtering by an ordinary method, it was cast into 70 °C pure water and washed for 1 hr. Thereafter, it was refiltered, dried at 220 °C in air and crushed to afford phosphorus-coated iron oxy-hydroxide.

Next, 50 g of the obtained phosphorus-coated iron oxy-hydroxide was batched off and fired for 30 min at 600 °C in the presence of an inert gas to obtain reddish-brown α-Fe₂O₃ (hematite). The hematite was repeatedly washed with pure water until the pH of the washing water stabilized. The powder properties of the obtained hematite and the results of evaluating a tape fabricated using it are shown in Tables 1 and 2.

### Example 2

Example 1 was repeated except that redispersion and washing in EDTA solution was not conducted to obtain α-Fe₂O₃ (hematite) coated with phosphorus. The obtained phosphor-coated hematite was dispersed in pure water containing 1 wt% of dissolved ethylenediamine tetraacetic acid, heated to a temperature of 70 °C and held thereat for 24 hr under exposure to ultrasound. Then, following filtering by an ordinary method, it was again cast into 70°C pure water and washed for 1 hr. Thereafter, it was refiltered, dried at 220°C in air and crushed to afford phosphorus-coated hematite. The powder properties of the obtained hematite and the results of evaluating a tape fabricated using it are shown in Tables 1 and 2.

### Example 3

The hematite obtained in Example 1 was subjected to washing as follows. Namely, the hematite obtained in Example 1 was dispersed in pure water containing 1 wt% of ethylenediamine tetraacetic acid, heated to a temperature of 70 °C and held thereat for 24 hr under exposure to ultrasound. Then, following filtering by an ordinary method, it was again cast into 70 °C pure water and washed for 1 hr. Thereafter, it was refiltered, dried at 220 °C in air and crushed to afford phosphorus-coated hematite. The powder properties of the obtained hematite and the results of evaluating a tape fabricated using it are shown in Tables 1 and 2.

### Example 4

710 g of iron oxy-hydroxide (α-FeOOH) having a major axis length of 132 nm and a specific surface area by the BET method of 130 m²/g was dispersed in 40 liters of pure water, whereafter the liquid was made alkaline by addition of 2000 g of 20 wt% NH₃ water, vigorously stirred while being maintained at a temperature of 35°C, and held in that condition for 30 min. Next, under continued stirring, an aqueous solution of yttrium sulfate containing 2.0 wt% of Y was added so that Y/Fe expressed in atomic percent became 1.0 at.%. This condition was maintained at 35 °C for 30 min. Next, 533.1 g of an aqueous solution of orthophosphate formulated to 2.0 wt% based on phosphorus was added and stirring was continued for 30 min with the temperature still maintained at 35 °C. The so-obtained slurry was then separated into mother liquor and cake by filtering, whereafter the cake was repulped, thereafter redispersed in a solution obtained by dissolving 1 wt% of ethylenediamine tetraacetic acid in pure water, heated to a temperature of 70 °C and held thereat for 24 hr under exposure to ultrasound. Then, following filtering, it was cast into 70 °C pure water and washed for 1 hr, refiltered, dried at 220 °C in air and crushed to afford iron oxy-hydroxide coated with phosphorus and Y.

The obtained phosphorus Y-coated iron oxy-hydroxide was fired under the same conditions as in Example 1 to obtain hematite, whereafter the hematite was washed under the same conditions as in Example 3. The powder properties of the obtained hematite and the results of evaluating a tape fabricated using it are shown in Tables 1 and 2.

### Example 5

Example 3 was repeated to obtain phosphor-coated hematite except that in the washing of the hematite after firing the 1 wt% ethylenediamine tetraacetic acid solution was replaced with 20 wt% ammonia water. The powder properties of the obtained hematite and the results of evaluating a tape fabricated using it are shown in Tables 1 and 2.

### Example 6

Example 5 was repeated to obtain phosphor-coated hematite except that in the washing of the iron oxy-hydroxide the 1 wt% ethylenediamine tetraacetic acid solution was replaced with 20 wt% ammonia water, The powder properties of the obtained hematite and the results of evaluating a tape fabricated using it are shown in Tables 1 and 2.

### Example 7

Example 3 was repeated to obtain phosphor-coated hematite except that as the iron oxy-hydroxide starting material there was used iron oxy-hydroxide containing 2.0 wt% aluminum that had an average major axis length of 145 nm and a specific surface area by the BET method of 134 m²/g. The powder properties of the obtained hematite and the results of evaluating a tape fabricated using it are shown in Tables 1 and 2.

### Example 8

Example 3 was repeated to obtain phosphor-coated hematite except that as the iron oxy-hydroxide starting material there was used iron oxy-hydroxide containing 0.5 wt% silicon based on SiO₂ that had an average major axis length of 132 nm and a specific surface area by the BET method of 138 m²/g. The powder properties of the obtained hematite and the results of evaluating a tape fabricated using it are shown in Tables 1 and 2.

### Example 9

Example 3 was repeated to obtain phosphor-coated hematite except that as the iron oxy-hydroxide starting material there was used iron oxy-hydroxide containing 0.5 wt% silicon based on SiO₂ and 2.0 wt% aluminum that had an average major axis length of 129 nm and a specific surface area by the BET method of 143 m²/g. The powder properties of the obtained hematite and the results of evaluating a tape fabricated using it are shown in Tables 1 and 2.

### Comparative Example 1

Example 1 was repeated to obtain phosphor-coated hematite except that after phosphorus-coated iron oxy-hydroxide had been produced under the same conditions as in Example 1, the phosphorus-coated iron oxy-hydroxide was cast in 30 °C pure water and washed for 2 hr, without carrying out washing with ethylenediamine tetraacetic acid. The powder properties of the obtained hematite and the results of evaluating a tape fabricated using it are shown in Tables 1 and 2.

### Comparative Example 2

Phosphor-coated hematite was obtained under the same conditions as in Comparative Example 1. The obtained hematite was redispersed in pure water and stirred, whereafter it was heated to 70 °C and washed for 5 hr. The powder properties of the obtained hematite and the results of evaluating a tape fabricated using it are shown in Tables 1 and 2.

### Comparative Example 3

Hematite was obtained by repeating Comparative Example 2 except that coating with phosphorus was not conducted. The powder properties of the obtained hematite and the results of evaluating a tape fabricated using it are shown in Tables 1 and 2.

### Example 10

Example 1 was repeated except that an orthophosphoric acid solution formulated to 1.0 wt% based on phosphorus was used in place of the orthophosphoric acid solution formulated to 2.0 wt% based on phosphorus. The powder properties of the obtained hematite and the results of evaluating a tape fabricated using it are shown in Tables 1 and 2.

### Example 11

Example 1 was repeated except that an orthophosphoric acid solution formulated to 4.0 wt% based on phosphorus was used in place of the orthophosphoric acid solution formulated to 2.0 wt% based on phosphorus. The powder properties of the obtained hematite and the results of evaluating a tape fabricated using it are shown in Tables 1 and 2.

### Example 12

Example 1 was repeated except that an orthophosphoric acid solution formulated to 6.0 wt% based on phosphorus was used in place of the orthophosphoric acid solution formulated to 2.0 wt% based on phosphorus. The powder properties of the obtained hematite and the results of evaluating a tape fabricated using it are shown in Tables 1 and 2.

### Comparative Example 4

Example 1 was repeated except that an orthophosphoric acid solution formulated to 10 wt% based on phosphorus was used in place of the orthophosphoric acid solution formulated to 2.0 wt% based on phosphorus. The powder properties of the obtained hematite are shown in Table 1. An attempt was made to fabricate a tape using this powder but a tape could not be made owing to poor dispersion. In addition, filterability was bad at the time of the operation of filtering the particles of iron oxy-hydroxide coated with phosphorus.

### Example 13

The same slurry containing dispersed iron oxy-hydroxide (particle concentration: 20 g/L) as used in Example 1 was added with a solution obtained by dissolving 3.02 g of aluminum oxide in 100 mL of dilute sulfuric acid (equivalent to 2.00 wt% as Al), heated to 50 °C, maintained at this temperature for 20 min, adjusted to about pH 8.5 by addition of ammonia water, and then filtered, washed and dried to obtain iron oxy-hydroxide coated with aluminum.

Phosphorus coating treatment like that of Example 1 was conducted using this iron oxy-hydroxide coated with aluminum as a starting material, thereby obtaining hematite coated with Al and phosphorus.

The so-obtained hematite was redispersed in pure water containing 1 wt% of dissolved ethylenediamine tetraacetic acid, heated to a temperature of 70 °C and held thereat for 24 hr under exposure to ultrasound. Then, following filtering by an ordinary method, it was again cast into 70°C pure water and washed for 1 hr. Thereafter, it was refiltered, dried at 220 °C in air and crushed to afford hematite containing Al and phosphorus. The powder properties of the obtained hematite and the results of evaluating a tape fabricated using it are shown in Tables 1 and 2.

### Example 14

The same slurry containing dispersed iron oxy-hydroxide (particle concentration: 20 g/L) as used in Example 1 was added with 23.45 g of an aqueous solution of the first grade sodium silicate containing 36.5 wt% as SiO₂ (equivalent to 0.50 wt% as Si), heated to 60 °C and then adjusted in liquid property to weak acidity by addition of 1% of acetic acid, whereafter it was maintained at this temperature (60°C) for 20 min, and then filtered, washed and dried (130°C) to obtain iron oxy-hydroxide coated with silicon.

Phosphorus coating treatment like that of Example 1 was conducted using this iron oxy-hydroxide coated with silicon as a starting material, thereby obtaining hematite coated with Si and phosphorus.

The so-obtained hematite was redispersed in pure water containing 1 wt% of dissolved ethylenediamine tetraacetic acid, heated to a temperature of 70 °C and held thereat for 24 hr under exposure to ultrasound. Then, following filtering by an ordinary method, it was again cast into 70 °C pure water and washed for 1hr. Thereafter, it was refiltered, dried at 220 °C in air and crushed to afford hematite containing Si and phosphorus. The powder properties of the obtained hematite and the results of evaluating a tape fabricated using it are shown in Tables 1 and 2.

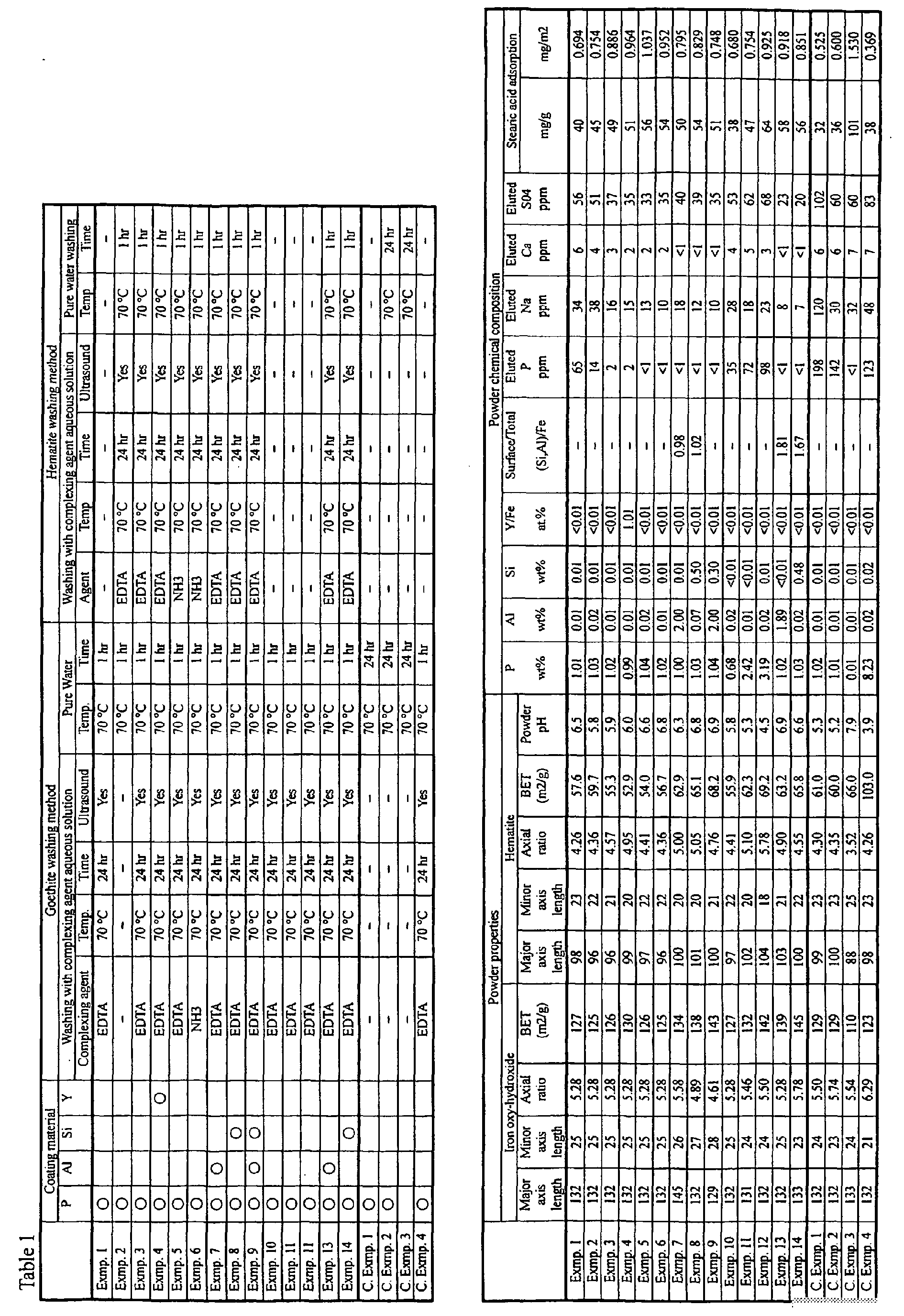

**Table 2**

| | Tape properties | | | | | | | | | | |
|---|---|---|---|---|---|---|---|---|---|---|---|
| | Evaluation of underlayer alone | | Double layer evaluation | Durability | | Output | | Coefficient of friction | | Surface Condition SEM | Head fouling |
| | Viscosity | Surface roughness | Surface roughness | Steel ball Sliding | Number of passes | Initial | After storage | Initial | After storage | | |
| | (mPa·s ) | (Å) | (Å) | (µm) | | (dB) | (dB) | (µ) | (µ) | | |
| Exmp. 1 | 135 | 80 | 45 | 180 | >1500 | 0.0 | -0.6 | 0.21 | 0.28 | O | O |
| Exmp. 2 | 92 | 70 | 35 | 170 | >1500 | -0.2 | -0.6 | 0.20 | 0.28 | O | O |
| Exmp. 3 | 90 | 65 | 35 | 160 | >1500 | 0.0 | -0.2 | 0.18 | 0.22 | Ⓞ | Ⓞ |
| Exmp. 4 | 95 | 35 | 15 | 160 | >1500 | 0.0 | -0.2 | 0.18 | 0.22 | Ⓞ | Ⓞ |
| Exmp. 5 | 85 | 70 | 35 | 170 | > 1500 | -0.1 | -0.2 | 0.17 | 0.21 | Ⓞ | Ⓞ |
| Exrmp. 6 | 83 | 65 | 35 | 170 | >1500 | 0.0 | -0.1 | 0.17 | 0.21 | Ⓞ | Ⓞ |
| Exmp. 7 | 95 | 60 | 30 | 160 | >1500 | -0.1 | -0.2 | 0.15 | 0.18 | Ⓞ | Ⓞ |
| Exmp. 8 | 103 | 55 | 25 | 150 | >1500 | 0.0 | -0.1 | 0.14 | 0.16 | Ⓞ | Ⓞ |
| Exmp. 9 | 108 | 50 | 20 | 170 | >1500 | 0.1 | 0.0 | 0.16 | 0.16 | O | O |
| Exmp. 10 | 120 | 70 | 40 | 190 | >1500 | 0.0 | -0.4 | 0.23 | 0.29 | O | O |
| Exmp. 11 | 132 | 85 | 45 | 170 | >1500 | 0.2 | -0.7 | 0.20 | 0.26 | O | O |
| Exmp. 12 | 148 | 95 | 50 | 160 | >1500 | 0.1 | -0.8 | 0.19 | 0.23 | O | O |
| Exmp. 13 | 93 | 50 | 25 | 160 | >1500 | 0.2 | -0.3 | 0.14 | 0.18 | Ⓞ | Ⓞ |
| Exmp. 14 | 98 | 50 | 25 | 150 | >1500 | 02 | -0.3 | 0.15 | 0.17 | Ⓞ | Ⓞ |
| C. Exmp. 1 | 360 | 125 | 60 | 160 | >1500 | 0.0 | -2.1 | 0.42 | 0.62 | x | x |
| C. Exmp. 2 | 279 | 110 | 55 | 170 | >1500 | -0.2 | -1.6 | 0.35 | 0.52 | x | x |
| C. Exmp. 3 | 120 | 155 | 50 | 450 | 360 | 0.1 | -0.3 | 0.20 | 0.22 | O | O |
| C. Exmp. 4 | Could not be dispersed Tape making not possible | | | | | | | | | | |

| | | | | | | | | | | | |
|---|---|---|---|---|---|---|---|---|---|---|---|
| Evaluation legend By SEM observation after storage Ⓞ (Almost no projections observed. Less than 1% of field of vision area) O (A few projections occurred. Less than 5% of field of vision area) x (Projections observed here and there. Head running property liable to occur) Head fouling Ⓞ (Almost no fouling observed) O (Some fouling occurred but slight in degree) x (Severe degree of fouling observed at some locations) | | | | | | | | | | | |

The following can be found from the results in Tables 1 and 2.
(1) From a comparison with Comparative Examples 2 and 3, it can be seen that tape durability improved and head fouling decreased when phosphorus was present in the hematite. However, surface roughness and storage stability tended to be worse in Comparative Example 2, in which phosphorus was present, than in Comparative Example 3, in which phosphorus was not present. Therefore, both were inadequate as an underlayer powder material for a magnetic recording medium.
(2) In comparison with the hematite of Comparative Example 2, which was not EDTA washed, the hematite of Example 1, which was EDTA washed before firing, had its eluted P reduced to about 1/3, with a concomitant improvement in tape properties, specifically a decrease in underlayer surface roughness and reduced head fouling during tape running.
(3) In comparison with the hematites of Examples 1 and 2, which were EDTA washed only before firing or after firing, the hematite of Example 3, which was EDTA washed both before and after firing, enabled the amount of eluted P to be reduced still further. And it can be seen that it was possible to achieve improved tape properties, namely, excellent surface properties and reduced head fouling during running, in proportion as the amount of eluted P decreased.
(4) Elution of components was more reduced in Example 5, in which included washing with ammonia water, than in Example 3, in which EDTA washing was done. Therefore, as the liquid used for washing, use of ammonia water, which can be reduced in intrusion of impurities, is more effective, whereby eluted components can be dramatically reduced to obtain hematite excellent as an underlayer powder for a magnetic recording medium.
(5) The action and effect of phosphorus incorporation (coating amount) is obvious from a comparison of Example 1 and Examples 10 - 12 with Comparative Examples 3 - 4. Specifically, incorporation of phosphorus is preferable, but when phosphorus is added excessively, filterability is degraded to make preparation of hematite difficult and when excessive phosphorus is present, dispersivity into the coating material deteriorates to render tape making impossible. Although the powder pH moves to the acidic side when the amount of added phosphorus is increased, which is generally preferable for the reason set out in the main text, when it goes too far, a chemical with the metal magnetic particles of the upper layer occurs over time to degrade the storage state.
(6) From a comparison of Examples 7 and 13 or Examples 8 and 14, it can be seen that the powder properties and medium properties were impacted depending on whether or not Al or Si was present on the surface. Specifically, it can be seen that the greater was the ratio of Al or Si present on the surface portion, the more the amount of eluted elements could be reduced. Although the fine points of this mechanism are not clear, it is considered that the Al or Si present in the manner of enveloping the particles enables reduction of eluted components from the particle interiors to be achieved.

As explained in the foregoing, by the present invention there can be obtained an iron oxide powder that can improve the properties required by an underlayer powder in a coating-type magnetic recording medium of double-layer structure, particularly the surface smoothness of the tape, tape strength and the storage stability of the tape. Therefore, by using the iron oxide powder of the present invention as an underlayer powder of a coating-type magnetic recording medium of double-layer structure, there can be obtained a durable recording medium suitable for high recording density.

## Claims

1. A powder for an underlayer of a coating-type double-layer magnetic recording medium, which powder is composed of acicular or nearly acicular nonmagnetic iron oxide particles having:
an average major axis length of 20 - 200nm, and
a specific surface area, calculated by the BET method, of 30-100 m²/g, and containing:
0.1-5 wt% of phosphorus, **characterized in that** the amount of soluble phosphorus compound is not greater than 100 ppm, based on P,
the powder pH is less than 8,
the content of soluble sodium compounds is not grater than 100 ppm, based on Na, and
the content of soluble sulphate is not greater than 100 ppm, based on SO₄.

2. An underlayer powder according to claim 1, containing R (R representing at least one rare earth element including Y) wherein the ratio R/Fe, expressed in atomic percent (at-%), is 0.1 - 10 at-%.

3. An underlayer powder according to claim 1 or 2, containing 0.1 - 50 wt-% of Al.

4. An underlayer powder according to any of claims 1 to 3, containing 0.1 - 50 wt-% of Si.

5. An underlayer powder according to claims 3 or 4, wherein Al and/or Si are concentrated on the particle surfaces.

6. A coating-type magnetic recording medium **characterized in that** in a coating-type magnetic recording medium of double-layer structure provided between a magnetic recording layer composed of magnetic powder dispersed in resin and a base film with a nonmagnetic layer (underlayer) composed of nonmagnetic powder dispersed in resin, an underlayer powder of any of claims 1 to 5 is used as the nonmagnetic powder.

7. A process for producing a hematite powder for an underlayer of a coating-type double-layer magnetic recording medium, as defined in any of claims 1 to 5, comprising firing an iron oxy-hydroxide powder surface-treated with a phosphorus compound, the process being **characterized in that** the iron oxy-hydroxide powder surfaced-treated with a phosphorus compound is washed with a solution of a complexing agent or with ammonium water, washed with water, and dried, then fired to obtain the hematite powder.

8. A process for producing a hematite powder for an underlayer of a coating-type double-layer magnetic recording medium, as defined in any of claims 1 to 5, comprising firing an iron oxy-hydroxide powder surfaced-treated with a phosphorus compound, the process being **characterized in that** the iron oxy-hydroxide powder surfaced-treated with a phosphorus compound is washed with a solution of a complexing agent or with ammonium water, dried and fired, and the hematite powder obtained is washed with a solution of a complexing agent or with ammonium water, washed with water, and dried.

## Patentansprüche

1. Ein Pulver für eine Unterschicht eines doppellagigen magnetischen Aufzeichnungsmediums des Beschichtungstyps, wobei das Pulver aus nadelförmigen oder fast nadelförmigen nicht magnetischen Eisenoxidteilchen besteht, welche folgendes aufweisen:
Eine durchschnittliche Hauptachsenlänge von 20 - 200 nm, und
eine spezifische Oberfläche, berechnet durch das BET-Verfahren, von 30 -100 m²/g, und wobei das Pulver 0,1-5 Gewichts-% Phosphor enthält, **dadurch gekennzeichnet, dass** die Menge von löslicher Phosphorverbindung nicht größer als 100 ppm ist, basierend auf P,
der pH-Wert des Pulvers geringer als 8 ist,
der Gehalt von löslichen Natriumverbindungen nicht größer als 100 ppm ist, basierend auf Na, und
der Gehalt von löslichem Sulfat nicht größer ist als 100 ppm, basierend auf SO₄.

2. Ein Unterschichtpulver gemäß Anspruch 1, welches R enthält (R repräsentiert mindestens ein Seltenerdelement einschließlich Y), wobei das Verhältnis R/ Fe, ausgedrückt in Atom-Prozent (at-%), 0,1 - 10 at-% ist.

3. Ein Unterschichtpulver gemäß einem der Ansprüche 1 oder 2, welches 0,1-50 Gewichts-Prozent Al enthält.

4. Ein Unterschichtpulver gemäß einem der Ansprüche 1-3, welches 0,1-50 Gewichts-Prozent Si enthält.

5. Ein Unterschichtpulver gemäß einem der Ansprüche 3 oder 4, wobei Al und/ oder Si auf den Teilchenoberflächen konzentriert sind.

6. Ein magnetisches Aufzeichnungsmedium des Beschichtungstyps, welches **dadurch gekennzeichnet ist, dass** in einem magnetischen Aufzeichnungsmedium des Beschichtungstyps von Doppellagenstruktur, welche zwischen einer magnetischen Aufzeichnungsschicht vorgesehen ist, welche aus magnetischem Pulver besteht, welches in Harz dispergiert ist und einen Basisfilm mit einer nicht magnetischen Schicht (Unterschicht), zusammengesetzt aus einem nicht magnetischen Pulver, welches in Harz dispergiert ist, wobei ein Unterschichtpulver gemäß einem der Ansprüche 1 - 5 als das nichtmagnetische Pulver verwendet wird.

7. Ein Verfahren zum Herstellen eines Hämatit-Pulvers für eine Unterschicht eines doppellagigen magnetischen Aufzeichnungsmediums des Beschichtungstyps, gemäß einem der Ansprüche 1-5, welches das Brennen eines Eisen-Oxyhydroxid-Pulvers, welches mit einer Phosphorverbindung oberflächenbehandelt ist aufweist, wobei das Verfahren **dadurch gekennzeichnet ist, dass** das Eisen-Oxyhydroxid-Pulver, welches mit einer Phosphorverbindung oberflächenbehandelt ist, mit einer Lösung einer Komplex bildenden Agens oder mit Ammoniakwasser gewaschen wird, mit Wasser gewaschen wird, und getrocknet wird, und dann gebrannt wird, um das Hämatit-Pulver zu erhalten.

8. Ein Verfahren zum Herstellen eines Hämatit-Pulvers für eine Unterschicht eines doppellagigen magnetischen Aufzeichnungsmediums des Beschichtungstyps, gemäß einem der Ansprüche 1-5, welches das Brennen eines Eisen-Oxyhydroxid-Pulvers aufweist, welches mit einer Phosphorverbindung oberflächenbehandelt ist, wobei das Verfahren **dadurch gekennzeichnet ist, dass** Eisen-Oxyhydroxid-Pulver, welches mit einer Phosphorverbindung oberflächenbehandelt ist, mit einer Lösung einer Komplex bildenden Agens oder mit Ammoniakwasser gewaschen wird, getrocknet und gebrannt wird, und dass das Hämatit-Pulver, welches erhalten wird, mit einer Lösung einer komplex bildenden Agens oder mit Ammoniakwasser gewaschen wird, mit Wasser gewaschen und getrocknet wird.

## Revendications

1. Poudre pour une sous-couche d'un milieu d'enregistrement magnétique à double couche de type revêtement, cette poudre étant constituée de particules d'oxyde de fer non-magnétique, aciculaire ou presque aciculaire, ayant :
une longueur moyenne de grand axe de 20 à 200 nm, et
une surface spécifique calculée par le procédé BET de 30 à 100 m²/g, et
contenant :
0,1 à 5 % en poids de phosphore, **caractérisée en ce que** la quantité de composé de phosphore soluble n'est pas supérieure à 100 ppm par rapport à P, le pH de la poudre est inférieur à 8, le contenu en composés de sodium soluble n'est pas supérieur à 100 ppm par rapport à Na, et le contenu en sulfate soluble n'est pas supérieur à 100 ppm par rapport à SO₄.

2. Poudre de sous-couche selon la revendication 1, contenant R (R représentant au moins un élément de terre rare incluant Y), le rapport R/Fe exprimé en atomes pourcent (at.%) étant de 0,1 à 10 at.%.

3. Poudre de sous-couche selon la revendication 1 ou 2, contenant 0,1 à 50 % en poids d'Al.

4. Poudre de sous-couche selon l'une quelconque des revendications 1 à 3, contenant 0,1 à 50 % en poids de Si.

5. Poudre de sous-couche selon la revendication 3 ou 4, dans laquelle A1 et/ou Si sont concentrés sur les surfaces de particules.

6. Milieu d'enregistrement magnétique de type revêtement, **caractérisé en ce que** dans un milieu d'enregistrement magnétique de type revêtement à structure en double couche prévu entre une couche d'enregistrement magnétique constituée de poudre magnétique dispersée dans la résine et un film de base comportant une couche non-magnétique (sous-couche) constituée de poudre non magnétique dispersée dans la résine, une poudre de sous-couche selon l'une quelconque des revendications 1 à 5 est utilisée comme poudre non-magnétique.

7. Procédé de fabrication d'une poudre d'hématite pour une sous-couche d'un milieu d'enregistrement magnétique à double couche de type revêtement, selon l'une quelconque des revendications 1 à 5, comprenant une cuisson d'une poudre d'oxy-hydroxide de fer traitée en surface par un composé de phosphore, le procédé étant **caractérisé en ce que** la poudre d'oxy-hydroxide de fer traitée en surface par un composé de phosphore est lavée par une solution d'un agent complexant ou par de l'eau d'ammonium, relavée à l'eau et séchée, puis recuite pour fournir la poudre d'hématite.

8. Procédé de fabrication d'une poudre d'hématite pour une sous-couche d'un milieu d'enregistrement magnétique à double couche de type revêtement, selon l'une quelconque des revendications 1 à 5, comprenant une cuisson d'une poudre d'oxy-hydroxide de fer traitée en surface par un composé de phosphore, le procédé étant **caractérisé en ce que** la poudre d'oxy-hydroxide de fer traitée en surface par un composé de phosphore est lavée par une solution d'un agent complexant ou par de l'eau d'ammonium, séchée et recuite, et la poudre d'hématite obtenue est lavée par une solution d'un agent complexant ou par de l'eau d'ammonium, lavée à l'eau et séchée.
